# EUROPÄISCHE PATENTANMELDUNG

(11) **EP 1 452 374 A2**
(43) Veröffentlichungstag der Anmeldung: **01.09.2004**
(21) Anmeldenummer: 04003628.7
(22) Anmeldetag: 18.02.2004
(51) Int. Cl.: B60J 10/12, B60J 10/00

(54) **Dichtung mit Gleitleiste für die Führung eines öffnungsfähigen Fahrzeugdachs sowie dazugehöriges Fahrzeugdach**

(30) Priorität: 27.02.2003 DE 10308592
(71) Anmelder: ArvinMeritor GmbH, 63128 Dietzenbach (DE)
(72) Erfinder: Schönebeck, Horst, 63571 Gelnhausen (DE); Biewer, Christian, 64839 Münster-Altheim (DE)
(74) Vertreter: Kitzhofer, Thomas, Dipl.-Ing.

(57) **Zusammenfassung**

Eine Dichtung für die Führung eines öffnungsfähigen Fahrzeugdachs hat ein elastisches Dichtprofil (52) und eine als separates Teil ausgebildete, daran befestigte, härtere Gleitleiste (62). Wenn die Dichtung (50) zusammengedrückt werden muß, um Platz für ein Verbindungsglied zwischen Längsführung und angehobenem Deckel Platz zu machen, wird nur die Gleitleiste (62) kontaktiert, so daß das Dichtungselement (52) keinem Verschleiß unterworfen ist.

## Beschreibung

Die Erfindung betrifft eine Dichtung für eine Führung eines Deckels eines öffnungsfähigen Fahrzeugdachs, mit einem elastischen Dichtungsprofil mit einer zu befestigenden Rückseite und einer Dichtungsseite.

Darüber hinaus betrifft die Erfindung ein Fahrzeugdach mit einer Dachöffnung und wenigstens einem die Dachöffnung wahlweise verschließenden, verfahrbaren und ausstellbaren Deckel sowie seitlichen Längsführmigen für den Deckel sowie wenigstens einem Verbindungsglied zwischen einer Längsführung und dem Deckel.

Derartige Fahrzeugdächer werden auch als sogenannte Spoilerdächer bezeichnet, bei denen der Deckel über die Dachhaut ausgestellt und anschließend oberhalb der Dachhaut nach hinten verschoben werden kann. Damit die Dachöffnung möglichst großflächig freigelegt wird, wird der Deckel zumindest teilweise über einen nicht verschieblichen, stationären Dachabschnitt verschoben. Seitlich.dieses Dachabschnitts sind die Längsführungen angeordnet. Der Deckel verfährt in den Bereich dieser Längsführungen, die jedoch bis zu diesem Zeitpunkt durch die darüberliegende Dichtung nach außen verschlossen sein sollen, um neben den Längsführungen auch den Innenraum und die gesamte Ausstell- und Verschiebemechanik vor Umwelteinflüssen, insbesondere Schmutzund Feuchteeintritt zu schützen.

Derartige Dichtungen sind hohen Anforderungen ausgesetzt. Nach dem Ausstellen des Deckels bleibt dieser mit den Längsführungen über Verbindungsglieder, üblicherweise Kulissen aus Metall verbunden. Wenn der Deckel samt der Verbindungsglieder verfahren wird und in den Bereich der Dichtung gelangt, drücken die Verbindungsglieder die Dichtung beiseite. Es kommt hier zu einem relativ hohen Verschleiß und zu großer Walkarbeit, was die Verfahrkräfte deutlich erhöht.

Die Erfindung schafft eine Dichtung sowie ein Fahrzeugdach mit einer Dichtung, bei der eine wesentlich geringere Walkarbeit geleistet werden muß und die sich durch eine deutlich geringere Reibung und einen deutlich geringeren Verschleiß auszeichnet.

Dies wird bei einer Dichtung der eingangs genannten Art dadurch erreicht, daß eine separate Gleitleiste am Dichtungsprofil befestigt ist. Diese Gleitleiste, die vorzugsweise an der Dichtungsseite des Dichtprofils befestigt ist, steht als Kontaktfläche für die Verbindungsglieder zur Verfügung, so daß diese nicht am weichen Dichtungsprofil entlang verschoben werden müssen. Die Gleitleiste ist vorzugsweise aus hartem Kunststoff, sie könnte jedoch auch aus Metall sein. Insbesondere bei der Ausbildung einer Gleitfläche mit sehr geringer Rauhtiefe können die Gleiteigenschaften stark verbessert werden. Die Gleitleiste beeinflußt das Dichtverhalten in keiner Weise, denn das Dichtungsprofil selbst sorgt außerhalb des Bereichs der Gleitleiste für die Abdichtung. Die Dichtung hat also funktional unterschiedliche Abschnitte aus unterschiedlichen Materialien, nämlich für die Dichtung und Deformation das weiche Dichtungsprofil und für die leichte Verschiebung und die Krafteinleitung die relative harte Gleitleiste.

Die Gleitleiste ist vorzugsweise formschlüssig in dem Dichtungsprofil aufgenommen und steht mit einer Gleitfläche gegenüber dem Dichtungsprofil abschnittsweise vor. Alternativ oder zusätzlich kann die Gleitleiste natürlich auch mit dem Dichtungsprofil verklebt oder etwa durch Vulkanisieren verbunden oder koextrudiert sein.

Im nicht belasteten Zustand der Dichtung ist die Gleitleiste gegenüber wenigstens einer Dichtfläche an der Dichtungsseite des Dichtungsprofils zurückversetzt. Dies soll sicherstellen, daß die Gleitleiste die Dichtwirkung nicht beeinflußt, denn die Dichtfläche des Dichtungsprofils steht seitlich vor, um am gegenüberliegenden Teil anliegen zu können und abzudichten.

Das Dichtungsprofil ist vorzugsweise ein geschlossenes Hohlprofil, welches eine hohe Elastizität bei relativ geringer Walkarbeit bietet.

Die Dichtungsseite sollte vorzugsweise entgegengesetzt zur Rückseite liegen, damit die Belastungen beim Zusammendrücken der Dichtung senkrecht auf die Befestigungsfläche wirkt und nicht parallel hierzu.

Das Dichtungsprofil hat gemäß der bevorzugten Ausführungsform einen B-förmigen Querschnitt, mit zwei wulstartigen Dichtflächen, wobei die Gleitleiste zwischen den wulstartigen Dichtflächen liegt. Dieses Profil hat sich als besonders vorteilhaft herausgestellt, weil es eine sehr gute Dichtwirkung, eine relativ leichte Deformierbarkeit sowie eine gute und sichere Aufnahme der Gleitleiste gewährleistet.

Das erfindungsgemäße Fahrzeugdach der eingangs genannten Art ist dadurch gekennzeichnet, daß jede Längsführung wenigstens abschnittsweise nach außen von der Dichtung abgedeckt wird und das zugeordnete Verbindungsglied beim Verfahren des Deckels die Gleitleiste kontaktiert und das Dichtungsprofil zusammendrückt.

Das Verbindungsglied sorgt also für eine Deformation des Dichtungsprofils, um einen Spalt freizugeben, durch welchen sich das Verbindungsglied hindurch nach außen erstrecken kann.

Das Verbindungsglied hat gemäß einer bevorzugten Ausführungsform einen Fortsatz, der die Gleitleiste kontaktiert, was insbesondere dann notwendig ist, wenn die Gleitleiste gegenüber der Dichtfläche zurückversetzt ist.

Dieser Fortsatz kann keilartig ausgebildet sein, um ein kontinuierliches Zusammendrücken des Dichtungsprofils beim Verschieben des Deckels zu ermöglichen.

Wie erwähnt sollte die Dichtung wenigstens zumindest denjenigen Abschnitt der Längsführung abdecken, der seitlich eines nicht verschieblichen, stationären Dachbereichs verläuft, wobei die Dichtung bei nicht verschobenem Deckel gegenüber dem festen Dachabschnitt abdichtet.

Die erfindungsgemäße Dichtung kann jedoch auch bei anderen öffnungsfähigen Dächern, außer den erwähnten Spoilerdächem eingesetzt werden, bei denen der Wunsch nach einer guten Abdichtung bei gleichzeitig guten Gleiteigenschaften vorherrscht.

Im ausgestellten und ausgefahrenen Zustand des Deckels ist das erfindungsgemäße Dach so ausgeführt, daß das Verbindungsglied von der zugeordneten Längsführung entlang der Dichtung bis zum oberhalb der Dachhaut liegenden Deckel ragt. Hierbei kontaktiert das Verbindungsglied aber die Dichtung nur an der Dichtleiste.

Die Dichtleiste sollte zwar gute Gleiteigenschaften haben, sie sollte aber darüber hinaus so flexibel sein, daß sie beim Entlangfahren des Verbindungsglieds nur im Bereich des Verbindungsgliedes deformiert wird, ansonsten würde ein zu großer Spalt entstehen, über den z. B. Feuchtigkeit in die Längsführung eindringen könnte.

Wenn ein großer Spalt abzudichten ist, können 'auch zwei Dichtungen nebeneinander liegen und mit ihren Dichtflächen gegeneinander gedrückt sein, um die Abdichtung zu gewährleisten. Das Verbindungsglied drückt die Dichtungen dann auseinander.

Weitere Merkmale und Vorteile der Erfindung ergeben sich aus der nachfolgenden Beschreibung und aus den nachfolgenden Zeichnungen, auf die Bezug genommen wird.

In den Zeichnungen zeigen:
- Fig. 1 eine perspektivische Ansicht eines erfindungsgemäßen FahrzeugDachs mit freigelegter Dachöffnung,
- Fig. 2 eine perspektivische Schnittansicht durch die beim erfindungsgemäßen Dach eingesetzte erfindungsgemäße Dichtung im nicht eingebautem Zustand,
- Fig. 3 einen schematischen Querschnitt längs der Linie III-III in Fig. 1 im Bereich der in Fahrtrichtung linken Längsführung,
- Fig. 4 eine Fig. 2 entsprechende Ansicht der erfindungsgemäßen Dichtung mit einem daran anliegenden Verbindungsglied, das die Dichtung zusammendrückt,
- Fig. 5 eine schematische Draufsicht auf die eingebaute Dichtung und das durch die Dichtung hindurch ragende, horizontal oberhalb der Dichtung geschnittene Verbindungsglied, und
- Fig. 6 einen schematischen Querschnitt entsprechend Fig. 3 durch ein modifiziertes, erfindungsgemäßes Dach.

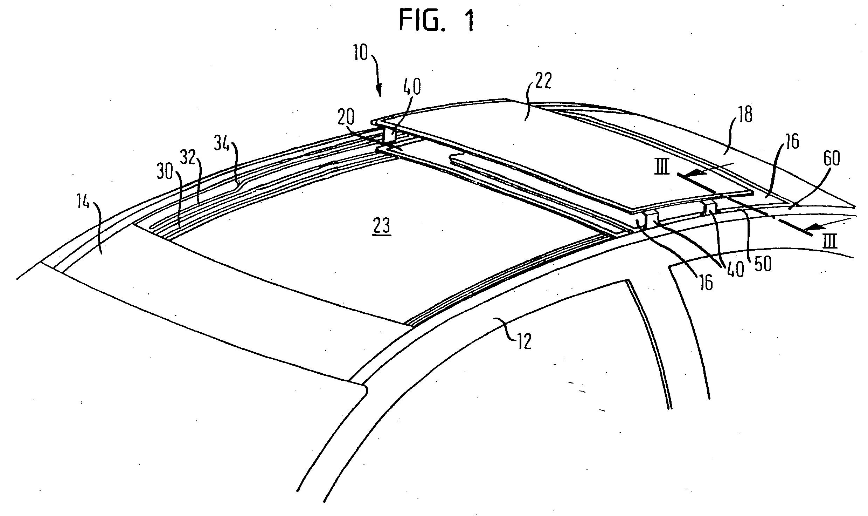

In Fig. 1 ist ein Fahrzeugdach 10 dargestellt, daß als komplettes Zulieferteil hergestellt wird und an dem Dachrahmen 12 befestigt wird. Das Dach 10 hat stationäre, nicht verschiebliche Dachabschnitte. 14, 16, 18, die die Dachhaut bilden. Der Abschnitt 16 ist dabei als stationärer Glasdeckel ausgebildet, der einen gewissen Lichteinfall für den Fontinsassen gewährleistet.

Das Dach ist öffnungsfähig, und zwar mittels zweier nach hinten verfahrbarer Deckel 20, 22. Dem Deckel 20 sind Längsführungen 30 auf beiden Seiten des Deckels und dem Deckel 22 Längsführungen 32 ebenfalls auf beiden Seiten des Deckels zugeordnet. Der Deckel 20 gleitet beim Verschieben nach hinten unter den Abschnitt 16, wie in Fig. 1 dargestellt. Der Deckel 22 hingegen ist nach oben ausstellbar dank eines Absatzes 34 in der Längsführung 32 und nach hinten verfahrbar. Die Dachöffnung trägt das Bezugszeichen 23.

Die Verbindung zwischen dem Deckel 22 und der Längsführuhg 32, die vorzugsweise als Kulissenführung ausgeführt ist, erfolgt über ein oder mehrere Verbindungsglieder 40, die vorzugsweise aus Metall und ggf. auch schwenkbar sind. Die Längsführungen 30, 32 verlaufen auch seitlich des stationären Abschnitts 16. Zumindest in den Bereich seitlich des Abschnitts 16 sind die Längsführungen 30, 32 nach oben durch eine Dichtung 50 abgedichtet, die vor Feuchte- und Schmutzeintritt schützt.

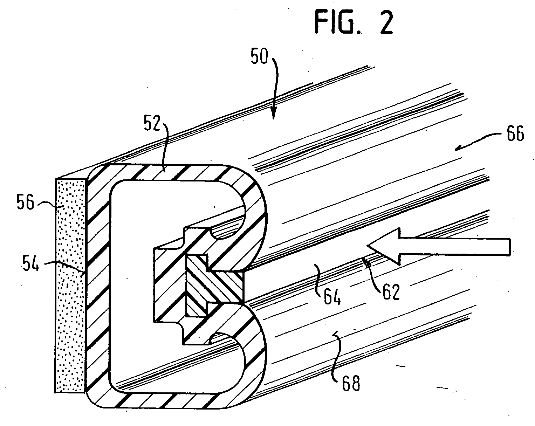

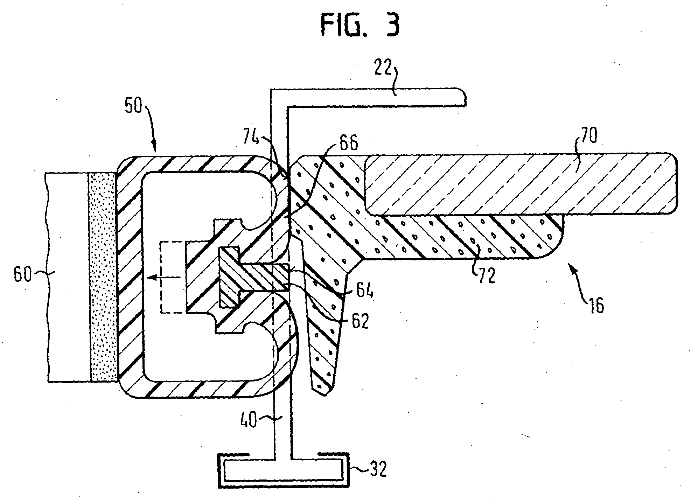

Diese Dichtung 50 ist in Fig. 2 deutlicher zu erkennen. Die Dichtung 50 umfaßt ein Dichtungsprofil 52 aus elastischem Material, das langgestreckt schlauchförmig verläuft und ein B-förmiges, geschlossenes Hohlprofil besitzt. Auf der Rückseite 54 des Dichtungsprofils 52 ist ein Gewebe-Klebeband 56 vorgesehen, mittels dem die gesamte Dichtung 50 an der Seite des Abschnitts 16 oder an einem Dach-Seitenrahmen 60 befestigt ist. Auf der der Rückseite entgegengesetzten Dichtungsseite hat die Dichtung 50 darüber hinaus eine über die gesamte Länge der Dichtung 50 verlaufende Gleitleiste 62 aus Kunststoffmaterial mit guten Gleiteigenschaften, deren Härte deutlich größer ist als die des Dichtungsprofils 52. Die Gleitleiste 62 hat im Querschnitt eine T-Form. Der Quersteg des "T" ist formschlüssig in eine komplementäre Ausnehmung im Dichtungsprofil 52 aufgenommen, wobei der Längssteg des "T" etwas aus dem Dichtungsprofil 52 herausragt und eine nach außen weisende Gleitfläche 64 hat. Die Gleitfläche 64 ist aber im nicht belasteten Zustand der Dichtung (Fig. 2) gegenüber den zwei wulstartigen Dichtflächen 66 und 68 des Dichtungsprofils 52 nach innen zurückversetzt. Im eingebauten Zustand (siehe Fig. 3) ist die Dichtung 50 am oberen Ende des Seitenrahmens 60 befestigt und schließt gegenüber dem stationären Abschnitt 16 dicht ab. Der stationäre Abschnitt 16 umfaßt eine Glasscheibe 70 und eine sie umgebende rahmenartige Umschäumung 72, an deren Seitenfläche 74 die obere wulstartige Dichtfläche 66 dichtend anliegt.

Wenn der Deckel 22 nach hinten verfahren wird, muß die Dichtung 50, mit Bezug auf Fig. 3, nach links in Pfeilrichtung zusammengedrückt werden, damit die Verbindungsglieder 40 von der Führung 32 nach oben zum Deckel 22 ragen können. Die Verbindungsglieder 40 haben zu diesem Zweck im Bereich der Gleitfläche 64 einen nach außen zur Gleitfläche 64 weisenden, von oben gesehen keilförmigen Fortsatz 80. Der Fortsatz 80 liegt auf einer solchen Höhe, daß er nur die Gleitfläche 64 berühren kann.

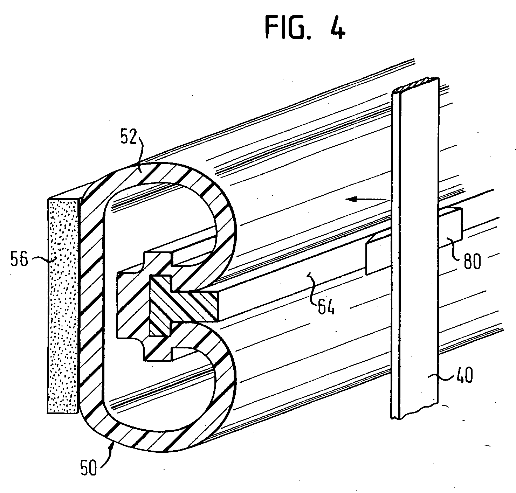

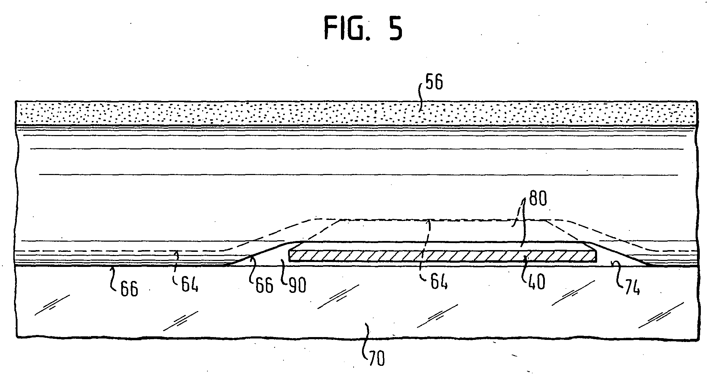

Wird der Deckel 22 nach oben ausgestellt und nach hinten verfahren, drückt der Fortsatz 80 gegen die Gleitfläche 64 und preßt damit das Dichtungsprofil 52 zusammen (siehe Fig. 4 und 5). Damit wird ein Spalt 90 geschaffen, durch den sich das Verbindungsglied 40 hindurch erstreckt. Das Verbindungsglied 40 berührt das Dichtungsprofil 52 überhaupt nicht, so daß hier kein Verschleiß auftritt und die Walkarbeit sehr gering ist.

Vorzugsweise schließt sich die Dichtung 50 in Fahrzeuglängsrichtung zu beiden Enden des Fortsatzes 80 wieder, wie in Fig. 5 dargestellt, damit der Spalt 90 nicht zu lang ist.

Die Dichtung 50 kann sich auch über die gesamte Länge der Längsführungen 32 erstrecken, damit keine zwei verschiedenen Dichtungen aneinander angrenzen.

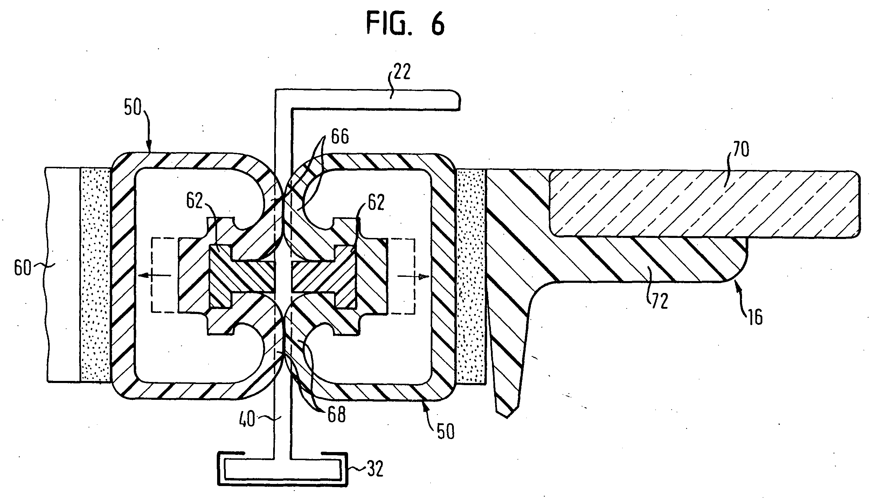

Bei der Ausführungsform nach Fig. 6 sind zwei Dichtungen 50 spiegelbildlich zueinander positioniert und stoßen mit ihren Dichtflächen 66, 68 unter Vorspannung aneinander, um einen größeren Spalt abzudichten. Das Verbindungsglied 40 drückt dann gegen die beiden Gleitflächen 64 und die Dichtungen 50 in entgegengesetzte Richtungen nach außen.

## Patentansprüche

1. Dichtung für eine Führung (32) eines Deckels (22) eines öffnungsfähigen Fahrzeugdachs, mit
einem elastischen Dichtungsprofil (52) mit einer zu befestigenden Rückseite (54) und einer Dichtungsseite,
**dadurch gekennzeichnet, daß** eine separate Gleitleiste (62) an dem Dichtungsprofil (52) befestigt ist.

2. Dichtung nach Anspruch 1, **dadurch gekennzeichnet, daß** die Gleitleiste (62) an der Dichtungsseite des Dichtungsprofils (52) befestigt ist.

3. Dichtung nach Anspruch 1 oder 2, **dadurch gekennzeichnet, daß** die Gleitleiste (62) formschlüssig in dem Dichtungsprofil (52) aufgenommen ist und mit einer Gleitfläche (62) aus dem Dichtungsprofil (52) herausragt.

4. Dichtung nach einem der vorhergehenden Ansprüche, **dadurch gekennzeichnet, daß** im nicht belasteten Zustand der Dichtung (50) die Gleitleiste (62) gegenüber wenigstens einer Dichtfläche (66, 68) an der Dichtungsseite zurückversetzt ist.

5. Dichtung nach einem der vorhergehenden Ansprüche, **dadurch gekennzeichnet, daß** das Dichtungsprofil (52) ein vorzugsweise geschlossenes Hohlprofil ist.

6. Dichtung nach einem der vorhergehenden Ansprüche, **dadurch gekennzeichnet, daß** die Dichtungsseite entgegengesetzt zur Rückseite (54) liegt.

7. Dichtung nach einem der vorhergehenden Ansprüche, **dadurch gekennzeichnet, daß** das Dichtungsprofil (52) einen B-förmigen Querschnitt hat, mit zwei wulstartigen Dichtflächen (66, 68), wobei die Gleitleiste (62) zwischen den wulstartigen Dichtflächen (66, 68) liegt.

8. Fahrzeugdach, mit einer Dachöffnung (23) und wenigstens einem die Dachöffnung (23) wahlweise verschließenden, verfahrbaren und ausstellbaren Deckel (22) und seitlichen Längsführungen (32) für den Deckel (22), sowie wenigstens einem Verbindungsglied (40) zwischen einer zugeordneten Längsführung (32) und dem Deckel (22),
**dadurch gekennzeichnet, daß**
die Längsführung (32) wenigstens abschnittsweise nach außen von einer zugeordneten Dichtung (50) nach einem der vorhergehenden Ansprüche abgedeckt ist und daß das zugeordnete Verbindungsglied (40) beim Verfahren des Deckels (22) die Gleitleiste (62) kontaktiert und das Dichtungsprofil (52) zusammendrückt.

9. Fahrzeugdach nach Anspruch 8, **dadurch gekennzeichnet, daß** das Verbindungsglied (40) beim Verfahren des Deckels (22) die Dichtung (50) nur im Bereich der Gleitleiste (62) kontaktiert.

10. Fahrzeugdach nach Anspruch 8 oder 9, **dadurch gekennzeichnet, daß** das Verbindungsglied (40) einen Fortsatz (80) hat, der die Gleitleiste (62) kontaktiert.

11. Fahrzeugdach nach Anspruch 10, **dadurch gekennzeichnet, daß** der Fortsatz (80) keilförmig ausgebildet ist.

12. Fahrzeugdach nach einem der Ansprüche 8 bis 11, **dadurch gekennzeichnet, daß** die Dichtung (50) zumindest denjenigen Abschnitt der Längsführung (32) abdeckt, der seitlich eines nicht verschieblichen, stationären Dachabschnitts (16) verläuft, wobei die Dichtung (50) bei nicht verschobenem Deckel (20) gegenüber dem stationären Dachbereich abdichtet.

13. Fahrzeugdach nach einem der Ansprüche 8 bis 12, **dadurch gekennzeichnet, daß** der Deckel (22) gegenüber der Dachhaut (14, 16, 18) angehoben werden kann und über einen nicht verschieblichen, stationären Dachabschnitt (16) verschiebbar ist.

14. Fahrzeugdach nach einem der Ansprüche 8 bis 13, **dadurch gekennzeichnet, daß** bei über die Dachhaut (14, 16, 18) angehobenem und verfahrenem Deckel (22) das Verbindungsglied (40) von der Längsführung (32) entlang der Dichtung (50) bis zum oberhalb der Dachhaut (14, 16, 18) liegenden Deckel (22) ragt und dabei die Dichtung (50) nur an der Gleitleiste (62) kontaktiert.

15. Fahrzeugdach nach einem der Ansprüche 8 bis 14, **dadurch gekennzeichnet, daß** zwei Dichtungen (50) nach einem der Ansprüche 1 bis 7 gegeneinander gepreßt sind und zusammen abdichten, wobei das Verbindungsglied (40) zwischen den beiden Dichtungen (50) hindurchtritt.
